# EUROPÄISCHE PATENTANMELDUNG

(11) **EP 1 688 322 A2**
(43) Veröffentlichungstag der Anmeldung: **09.08.2006**
(21) Anmeldenummer: 05027753.2
(22) Anmeldetag: 19.12.2005
(51) Int. Cl.: B60R 21/20

(54) **Gassack-Modul**

(30) Priorität: 03.02.2005 DE 102005005042
(71) Anmelder: TRW Automotive Safety Systems GmbH, 63743 Aschaffenburg (DE)
(72) Erfinder: Kreuzer, Martin, 63839 Kleinwallstadt (DE)
(74) Vertreter: Sulzbach, Werner

(57) **Zusammenfassung**

Die Erfindung betrifft ein Gassack-Modul für ein Fahrzeuginsassen-Rückhaltesystem, mit einem Gasgenerator, einem Trägerteil für den Gasgenerator, einem dem Gasgenerator zugeordneten Gassack und einer Abdeckung für den Gassack. Das Gassackmodul ist dadurch gekennzeichnet, daß das Trägerteil und/oder die Abdeckung wenigstens eine Schicht aus einer Polymermatrix mit darin verteilten exfolierten Schichtsilikatpartikeln umfaßt, wobei die exfolierten Schichtsilikatpartikel eine Dicke von 0,5 bis 2 nm und einen Flächendurchmesser von bis zu 10 µm aufweisen.

## Beschreibung

Die Erfindung betrifft ein Gassack-Modul für ein Fahrzeuginsassen-Rückhaltesystem.

Die Rahmen- und Trägerteile von Gassack-Modulen sowie die Gassack-Abdeckungen werden heutzutage mit Hilfe von Spritzguß- oder anderen Formverfahren für Kunststoffe hergestellt. Die Trägerteile des Gassackmoduls dienen zur Aufnahme eines Gasgenerators und zur fahrzeugseitigen Befestigung des Moduls. Die Gassack-Abdeckung verschließt das Modul zum Fahrzeug-Innenraum hin. Die Abdeckung ist an ihrer Innenseite mit einer sogenannten Reißlinie versehen, die bei der Aktivierung des Gassacks durch den Gasgenerator als Sollbruchstelle wirkt und das Aufklappen der Abdeckung ermöglicht. Dadurch kann der sich ausdehnende Gassack aus dem Modul austreten und einen Aufprall des Fahrzeuginsassen auf die Lenkradsäule, die Armaturentafel oder die Windschutzscheibe verhindern.

Üblicherweise bestehen die Abdeckungen aus einem thermoplastischen Kunststoff, wie Polyurethan. Zur Anwendung kommen auch thermoplastische Elastomere aus der Gruppe der thermoplastischen Olefine (TPO), der thermoplastischen Ester (TPEE), der thermoplastischen Polyurethane (TPU) sowie der styrolmodifizierten Werkstoffe (SEBS). Die EP 0 779 185 B1 beschreibt Abdeckungen, die als Hauptbestandteil eine oder mehrere miteinander in Verbund gebrachte Schichten aus einem Material aufweisen, welches aus der aus den Elastomerlegierungen eines thermoplastischen Polymers mit einem unvernetzten, teilvernetzten oder vollvernetzten EPDM-Terpolymer, den Blockcopolymeren von alternierenden Polyester- und Polyetherblöcken sowie den Blockcopolymeren von Polystyrol und Polyolefinen bestehenden Gruppe ausgewählt ist.

Zur Herstellung der Träger- und Rahmenteile des Gassack-Moduls werden üblicherweise thermoplastische Kunststoffe aus Polyamid sowie faserverstärkte Kunststoffe verwendet.

Die Trägerteile und Abdeckungen aus den thermoplastischen Kunststoffen oder thermoplastischen Elastomeren haben sich in der Praxis bewährt und erfüllen auch die bei den Grenztemperaturen zwischen -35 °C und +85 °C geltenden Anforderungen. Unter Echttemperatur-Prüfbedingungen in der Klimakammer ist jedoch insbesondere im Tieftemperaturbereich eine Zunahme der Versprödung und damit eine Beeinträchtigung der mechanischen Eigenschaften zu beobachten.

Die Erfindung schafft daher ein Gassack-Modul für ein Fahrzeuginsassen-Rückhaltesystem, bei dem diese Nachteile vermieden werden und dessen Bauteile ein verbessertes Versprödungsverhalten bei tiefen Temperaturen und eine verbesserte Temperaturwechselbeständigkeit aufweisen. Das erfindungsgemäße Gassack-Modul umfaßt einen Gasgenerator, ein Trägerteil für den Gasgenerator, einen dem Gasgenerator zugeordneten Gassack und eine Abdeckung für den Gassack, und ist dadurch gekennzeichnet, daß das Trägerteil und/oder die Abdeckung wenigstens eine Schicht aus einer Polymermatrix mit gleichmäßig darin verteilten exfolierten Schichtsilikatpartikeln umfaßt, wobei die exfolierten Schichtsilikatpartikel eine Dicke von 0,5 bis 2 nm und einen Flächendurchmesser von bis zu 10 µm, bevorzugt 100 nm bis 1 µm, aufweisen.

Die Verwendung von Kunststoffen, die erfindungsgemäß mit den plättchenförmigen exfolierten Schichtsilikatpartikeln gefüllt sind, bei der Herstellung der tragenden Teile sowie der Abdeckung des Gassackmoduls führt zu einer Verbesserung nahezu aller mechanischen Eigenschaften dieser Bauteile. Insbesondere kann eine deutliche Steigerung des Elastizitätsmoduls, der Streckspannung und der Temperaturbeständigkeit der gefüllten Kunststoffe beobachtet werden. Darüber hinaus werden auch die Oberflächenqualität der Bauteile und deren Verschmutzungsanfälligkeit sowie die Wärmeformbeständigkeit und die Flammschutzeigenschaften verbessert. Da die Bauteile auch bei tiefen Temperaturen im Bereich von -35°C und mehrmaligen Temperaturwechseln zwischen -35°C und +85°C in der Klimakammer nicht verspröden, können sie auch bei diesen Temperaturen größere Lasten aufnehmen. Die Funktionssicherheit der Bauteile ist damit insbesondere auch bei tiefen Temperaturen gewährleistet.

Die Schichtsilikatpartikel liegen bevorzugt in einem Anteil von 0,5 bis 10 Gew.-Teilen, besonders bevorzugt von 1 bis 6 Gew.-Teilen pro 100 Gew.-Teilen der Polymermatrix vor. Als Schichtsilikate können natürliche oder synthetische Zweischicht- oder Dreischichtsilikate eingesetzt werden, die zum Ionenaustausch geeignet sind. Typische Vertreter sind Montmorrilonit, Saponit, Beidelit, Nontronit, Sauconit, Stevensonit und Hektorit, sowie auch Bentonit, Vermiculit, Halloysit, Kaolin, Calciummethasilikat oder synthetischer Smektit wie Fluorosmektit. Die Schichtsilikate weisen bevorzugt eine Ionenaustauschkapazität von mindestens 20 bis 200 meq/100 g (Milliäquivalente bezogen auf 100 g Feststoffgehalt) auf. Die Ionenaustauschkapazität gibt die Konzentration an Ionen an, die durch Lösungen neutraler Salze von der Schichtsilikatoberfläche durch einen stöchiometrischen Ionenaustauschmechanismus substituierbar sind.

Die Oberfläche der Schichtsilikatpartikel kann durch Ionenaustausch mit organischen Oniumverbindungen, wie beispielsweise Ammoniumverbindungen (NR₄⁺), Phosphoniumverbindungen (PR₄⁺), Oxoniumverbindungen (R₃O⁺), Diazoniumverbindungen RN₂⁺, Arsoniumverbindungen (AsR₄⁺) und Sulfoniumverbindungen (R₃S⁺), hydrophobiert sein. Die Reste R der organischen Oniumverbindung können gleich oder verschieden sein und sind aus der aus Wasserstoff, substituierten und unsubstituierten, gesättigten und ungesättigten Alkylgruppen mit 1 bis 40 Kohlenstoffatomen mit oder ohne Verzweigung und substituierten und unsubstituierten Arylgruppen und Benzylgruppen bestehenden Gruppe ausgewählt, wobei mindestens ein organischer Rest R eine mit funktionellen Gruppen substituierte oder unsubstituierte, gesättigte oder ungesättigte Alkylgruppe mit mindestens 6 Kohlenstoffatomen ist.

Bevorzugt sind diejenigen quartären Ammoniumverbindungen, die von Lactamen oder ω-Aminosäuren abgeleitet sind.

Die Herstellung der Formmassen aus mit den Schichtsilikatpartikeln gefüllten Polymeren kann durch Einbringen der gegebenenfalls hydrophobierten Schichtsilikate vor, während oder nach der Polymerisation der Monomere zur Polymermatrix erfolgen. Eine Zugabe nach der Polymerisation erfolgt vorzugsweise zur Schmelze des Matrixpolymers in einem Extruder. Durch die bei der Extrusion wirkenden Scherkräfte werden die Schichtsilikate exfoliert, d.h. delaminiert, und die daraus entstehenden plättchenförmigen Schichtsilikatpartikel werden geichmäßig in der Polymermatrix verteilt. Die Polymermatrix kann aus den für die Herstellung von Gassack-Abdeckungen und Gasgeneratorträgern grundsätzlich bekannten Polymeren bestehen. Geeignet sind thermoplastische Polymere wie Polyurethan und Polyamid, sowie thermoplastische Olefine, Polyester und styrolmodifizierte Werkstoffe, einschließlich der thermoplastischen Elastomerlegierungen, wie sie beispielsweise aus der EP 0 779 185 B1 bekannt sind.

Die Polymermatrix kann zusätzlich weitere faserförmige Verstärkungsstoffe und/oder mineralische Füllstoffe enthalten. Als faserförmige Verstärkungsstoffe sind Glasfasern, Kohlefasern, Aramidfasern, Mineralfasern und Whisker geeignet. Als mineralische Füllstoffe können Calciumcarbonat, Dolomit, Calciumsulfat, Glimmer, Fluorglimmer, Wollastonit, Talkum und Kaolin sowie Oxide und Oxidhydrate von Bor, Aluminium, Gallium, Indium, Silizium, Zinn, Titan, Zirkonium, Zink, Yttrium oder Eisen verwendet werden. Die weiteren Füllstoffe liegen vorzugsweise in einem Anteil von bis zu 30 Gew.-Teilen, bezogen auf 100 Gew.-Teile der Polymermatrix, vor, und zwar zusätzlich zu den exfolierten Schichtsilikatpartikeln.

Schließlich kann in der Polymermatrix ein Kupplungsmittel zur Verbindung der Schichtsilikatpartikel mit der Polymermatrix enthalten sein. Geeignete Kupplungsmittel sind beispielsweise Organosilane und Polysiloxane mit endständigen funktionellen Gruppen, wie beispielsweise Aminosilane, Vinylsilane, Glyzidoxysilane oder Polysiloxanole, die einerseits chemisch an die anorganischen Schichtsilikatpartikel und andererseits an die organische Polymermatrix binden können. Die Kupplungsmittel können zusätzlich zu den oben genannten Oniumverbindungen oder, bei entsprechender Funktionalisierung, auch anstelle der organischen Oniumverbindungen eingesetzt werden. Ferner können die Kupplungsmittel auch indirekt, über funktionelle Gruppen der Oniumverbindung, an die Schichtsilikatpartikel gebunden sein. Bei Verwendung der Kupplungsmittel ist eine weitere Verbesserung der mechanischen Eigenschaften der erfindungsgemäßen Formteile zu erwarten.

Die durch Eincompoundieren der hydrophobierten und gegebenenfalls durch Beimischen von Kupplungsmitteln modifizierten Schichtsilikate in die Polymermatrix erhaltenen Formmassen lassen sich durch bekannte Guß- oder Spritzgußverfahren zu Formteilen, wie den erfindungsgemäßen Gassack-Abdeckungen und/oder Trägerteilen eines Gassackmoduls verarbeiten. Die so erhaltenen Formteile verspröden auch bei tiefen Temperaturen nicht und können somit auch im Grenztemperaturbereich von -35°C noch hohe Lasten aufnehmen.

Weitere Vorteile der Erfindung ergeben sich aus der nachfolgenden Beschreibung eines bevorzugten Ausführungsbeispiels, das jedoch nicht in einschränkendem Sinn zu verstehen ist.

### Ausführungsbeispiel 1

3 Gew.-Teile eines hydrophobierten Schichtsilikats (Bentonit, hydrophobiert mit Dimethyldioctadecylammoniumchlorid; Flächendurchmesser >1 µm, Schichtdicke 0,5 bis 2 nm) und 100 Gew.-Teile Polyamid 6 (Ultramid B5 Natur, BASF) wurden zunächst in einem Mischer homogenisiert und anschließend auf einem Zweischneckenextruder bei ca. 260°C compoundiert, in ein Wasserbad extrudiert und granuliert. Aus dem so erhaltenen Granulat wurden Probekörper gegossen und in der Klimakammer einem Temperaturwechselversuch im Bereich zwischen -35°C und 85°C unterzogen. Auch nach mehrmaligen Temperaturwechseln war keine Änderung der mechanischen Eigenschaften der Probekörper feststellbar.

Vergleichsversuche mit reinem Polyamid 6 (Ultramid B5) ergaben für das mit hydrophobiertem Bentonit gefüllte Polymer eine Steigerung des E-Moduls von 58 %, der Streckspannung von 19 % und der Temperaturbeständigkeit um 15°C.

## Patentansprüche

1. Gassack-Modul für ein Fahrzeuginsassen-Rückhaltesystem, mit einem Gasgenerator, einem Trägerteil für den Gasgenerator, einem dem Gasgenerator zugeordneten Gassack und einer Abdeckung für den Gassack, **dadurch gekennzeichnet, daß** das Trägerteil und/oder die Abdeckung wenigstens eine Schicht aus einer Polymermatrix mit darin verteilten exfolierten Schichtsilikatpartikeln umfaßt, wobei die exfolierten Schichtsilikatpartikel eine Dicke von 0,5 bis 2 nm und einen Flächendurchmesser von bis zu 10 µm aufweisen.

2. Gassack-Modul nach Anspruch 1, **dadurch gekennzeichnet, daß** die Schichtsilikatpartikel in einem Anteil von 1 bis 6 Gewichtsteilen pro 100 Gewichtsteilen der Polymermatrix vorliegen.

3. Gassack- Modul nach Anspruch 1 oder 2, **dadurch gekennzeichnet, daß** die Schichtsilikatpartikel unter Verwendung von organischen Oniumverbindungen hydrophobiert sind.

4. Gassack-Modul nach Anspruch 3, **dadurch gekennzeichnet, daß** die organischen Oniumverbindungen aus der Gruppe der von Aminosäuren und Aminosäurederivaten abgeleiteten Verbindungen ausgewählt sind.

5. Gassack-Modul nach einem der vorhergehenden Ansprüche, **dadurch gekennzeichnet, daß** die Schichtsilikate aus der aus Montmorrilonit, Saponit, Beidelit, Nontronit, Sauconit, Stevensonit, Hektorit, Bentonit, Vermiculit, Halloysit, Kaolin, Calciummethasilikat, Smektit und Fluorosmektit bestehenden Gruppe ausgewählt sind.

6. Gassack-Modul nach einem der vorhergehenden Ansprüche, **dadurch gekennzeichnet, daß** die Polymermatrix ferner ein Kupplungsmittel zur Verbindung der Schichtsilikate mit der Polymermatrix umfaßt.

7. Gassack-Modul nach Anspruch 6, **dadurch gekennzeichnet, daß** das Kupplungsmittel aus der Gruppe der Organosilane und Polysiloxane mit endständigen funktionellen Gruppen ausgewählt ist.

8. Gassack-Modul nach Anspruch 7, **dadurch gekennzeichnet, daß** das Kupplungsmittel aus der Gruppe der Aminosilane, Vinylsilane, Glyzidoxysilane und Polysiloxanole sowie deren Derivate und Mischungen ausgewählt ist.

9. Gassack-Modul nach einem der vorhergehenden Ansprüche, **dadurch gekennzeichnet, daß** die Polymermatrix aus der Gruppe der thermoplastischen Polymere, einschließlich Polyurethan und Polyamid, und thermoplastischen Elastomere ausgewählt ist.

10. Gassack-Modul nach einem der vorhergehenden Ansprüche, **dadurch gekennzeichnet, daß** die Polymermatrix aus Polyamid besteht.
